# EUROPEAN PATENT SPECIFICATION

(11) **EP 2 216 164 B1**
(45) Date of publication and mention of the grant of the patent: **11.07.2018**
(21) Application number: 10152063.3
(22) Date of filing: 29.01.2010
(51) Int. Cl.: B29C 65/52, D06H 5/00

(54) **Cloth bonding apparatus**
Vorrichtung zum Verbinden vom Stoff
Appareil de liaison de tissus

(30) Priority: 04.02.2009 JP 2009023232; 28.05.2009 JP 2009128547
(43) Date of publication of application: 11.08.2010
(73) Proprietor: Brother Kogyo Kabushiki Kaisha, Nagoya-shi, Aichi 467-8561 (JP)
(72) Inventor: Yamaura, Hiroki, Nagoya-shi Aichi 467-8562 (JP); Nishimura, Kazuto, Nagoya-shi Aichi 467-8562 (JP); Enya, Tetsuji, Nagoya-shi Aichi 467-8562 (JP); Yoshimoto, Naoki, Nagoya-shi Aichi 467-8562 (JP); Iwakoshi, Hiroyasu, Nagoya-shi Aichi 467-8562 (JP); Ohmura, Yoshikazu, Nagoya-shi Aichi 467-8562 (JP); Umeda, Kazutoshi, Nagoya-shi Aichi 467-8562 (JP)
(74) Representative: Prüfer & Partner mbB Patentanwälte · Rechtsanwälte

(56) References cited:
- JP-A- 53 006 681
- US-A- 2 655 980
- US-A- 2 664 938
- US-A- 3 295 493
- US-A1- 2003 010 439

## Description

### BACKGROUND

The present invention relates to a cloth bonding apparatus. More specifically, the present invention relates to a cloth bonding apparatus that bonds two layers of cloth by applying an adhesive onto one of the layers of cloth and pressing them together.

A bonding apparatus is directed for bonding cloths with an adhesive, instead of sewing the cloths with a needle and a thread. The bonding apparatus discharges and applies a liquid adhesive onto a cloth. Another cloth is placed on the cloth onto which the adhesive has been applied, and the bonding apparatus bonds the cloths together. Since no thread is used for the cloths, the bonded cloths do not show unevenness.

JP 2003-326602 A discloses a weld bonding apparatus for weld-bonding a seam of cloths. In the weld bonding apparatus, a drive mechanism such as a cylinder is driven in response to a worker's operation of an operation portion. When the worker operates a changeover switch provided in the operation portion, a cylinder portion and an arm portion move to either an operating position or a waiting position. The cylinder portion and the arm portion perform welding. The weld bonding apparatus may enhance workability in the weld bonding.

### SUMMARY

In the weld bonding apparatus described above, a roller for feeding the cloths and the operation portion are at distant positions. The worker may input an instruction of controlling an operation of the weld bonding apparatus from the operation portion. However, the worker may need to operate the operation portion distant from the cloths to be fed each time the worker inputs the instruction. US 2003/010439 A1 discloses a cloth bonding apparatus comprising a nozzle through which an adhesive is dischargeable onto a first layer of cloth; a discharging portion adapted to discharge the adhesive through the nozzle and including a supplying portion adapted to pressurize and supply the adhesive to the nozzle, and a supply controlling portion that controls a supply of the adhesive to the nozzle by the supplying portion; a feeding portion adapted to press and feed the first layer of cloth with a second layer of cloth; a pedal; and an operation portion adapted to be operated by an operator for giving an instruction of controlling an operation of the cloth bonding apparatus. Other cloth bonding apparatuses are known from US 2,655,980 A; US 2,664,938 A; US 3,295,493 A; and JP S53-006681 A.

It is an object of the present invention to provide a cloth bonding apparatus that enables a worker to easily input an instruction of controlling an operation of the cloth bonding apparatus and to efficiently perform a cloth bonding work. This object is achieved by the cloth bonding apparatus having the features of claim 1. The present invention is further developed as defined in the dependent claims.

The cloth bonding apparatus according to the present invention includes a nozzle through which an adhesive is dischargeable onto a first layer of cloth, a discharging portion adapted to discharge the adhesive through the nozzle, and a feeding portion adapted to press and feed the first layer of cloth with a second layer of cloth, an operation portion adapted to be operated by an operator for giving an instruction of controlling an operation of the cloth bonding apparatus, the operation portion being positioned in the vicinity of the nozzle or the feeding portion.

According to the cloth bonding apparatus, the worker may give an instruction of controlling an operation of the cloth bonding apparatus by operating the operation portion. The operation portion is positioned in the vicinity of the nozzle or the feeding portion. Thus, the operator may be able to operate the operation portion without largely moving the hand, while adjusting feeding of the first and second layers of cloth with the hand or confirming whether the work is appropriately proceeding. The operator may easily control the operation of the cloth bonding apparatus.

The cloth bonding apparatus may include a supporting portion that supports the nozzle, and the operation portion may be provided at the supporting portion. In such a case, the operator may easily control the operation of the cloth bonding apparatus while confirming whether the nozzle is appropriately discharging the adhesive.

The cloth bonding apparatus may include a holding portion that holds the feeding portion, and the operation portion may be provided at the holding portion. In such a case, the operator may easily control the operation of the cloth bonding apparatus while confirming whether the feeding portion is appropriately pressing and feeding the first and second layers of cloth.

The discharging portion includes a supplying portion adapted to pressurize and supply the adhesive to the nozzle and a supply controlling portion that controls a supply of the adhesive to the nozzle by the supplying portion. The operation portion outputs to the supply controlling portion a signal indicating whether or not to cause the supplying portion to supply the adhesive. In this case, the operator can control the operation of the supplying portion by operating the operation portion. Thus, the operator can directly and easily control the discharging of the adhesive from the nozzle.

The discharging portion includes a blocking-off portion that operates in response to an operation of the operation portion and blocks off a channel adapted to lead the adhesive to the nozzle. In this case, the operator can control the operation of the blocking-off portion by operating the operation portion. Thus, when the cloth bonding apparatus stops discharging the adhesive in response to the operator's operation, the adhesive will not drop from the nozzle. The cloth bonding apparatus can reliably stop discharging the adhesive.

The operation portion may include a plurality of operation members adapted to be operated by the operator, and the cloth bonding apparatus may include an assigning portion that assigns any of a plurality of functions for giving the instruction of controlling the operation of the cloth bonding apparatus to the respective plurality of operation members. In this case, the operator can use the multiple functions assigned to the plurality of operation members. Thus, the operator can perform the cloth bonding work by using a desired function among the plurality of functions.

The assigning portion may assign the same function to two or more of the operation members. In this case, for example, when the number of functions frequently used by the operator is smaller than the number of operation members, the cloth bonding apparatus can assign the same function to the two or more of the operation members. Thus, the operator is less likely to erroneously input an unintended instruction.

The cloth bonding apparatus may include a designation receiving portion that receives information for designating which of the plurality of functions to be assigned to the respective plurality of operation members. The assigning portion may assign any of the plurality of functions to the respective plurality of operation members, according to the information received by the designation receiving portion. In this case, if the operator designates a desired function to be assigned to the respective plurality of operation members, in consideration of use frequency, usability and the like in each step, the operator can more easily perform the cloth bonding work.

### BRIEF DESCRIPTION OF THE DRAWINGS

Exemplary embodiments of the present disclosure will be described below in detail with reference to the accompanying drawings in which:
Fig. 1 is an upper front perspective view of a cloth bonding apparatus 1 according to a first embodiment;
Fig. 2 is an upper front perspective view of a bonding machine 2 according to the first embodiment;
Fig. 3 is a front view of the bonding machine 2 according to the first embodiment;
Fig. 4 is a left side view of the bonding machine 2 according to the first embodiment;
Fig. 5 is an upper front perspective view of an inner configuration of the bonding machine 2 according to the first embodiment;
Fig. 6 is a sectional view of a storage chamber 26, a pump casing 31 and a support portion 40 when the bonding machine 2 shown in Fig. 2 is seen from the left side;
Fig. 7 is a block diagram showing an electric configuration of the cloth bonding apparatus 1 according to the first embodiment;
Fig. 8 is a partially enlarged perspective view showing a nozzle 45 and a vicinity of the nozzle 45 at the time of bonding work;
Fig. 9 is a flowchart of a feed control processing performed by a CPU 201 of the cloth bonding apparatus 1 according to the first embodiment;
Fig. 10 is an upper front perspective view of a bonding machine 252 of a cloth bonding apparatus according to a second embodiment;
Fig. 11 is a flowchart of a function assignment processing performed by the CPU 201 of the cloth bonding apparatus according to the second embodiment;
Fig. 12 is an explanatory diagram showing examples of assignable functions;
Fig. 13 is a view showing one example of a bonding step;
Fig. 14 is a view showing another example of a bonding step;
Fig. 15 is a view showing yet another example of a bonding step;
Fig. 16 is an upper front perspective view of a bonding machine 302 according to a modified embodiment 1; and
Fig. 17 is an upper front perspective view of the entire cloth bonding apparatus 401 according to a modified embodiment 2.

### DETAILED DESCRIPTION OF EXEMPLARY EMBODIMENTS

A cloth bonding apparatus 1 according to a first embodiment of the present invention will be described below with reference to the drawings. The drawings are used for explaining the technical features that can be employed by the present invention. The configurations of the apparatus, the flowcharts of various processing and the like shown in the drawings are merely exemplary and do not intend to limit the present invention.

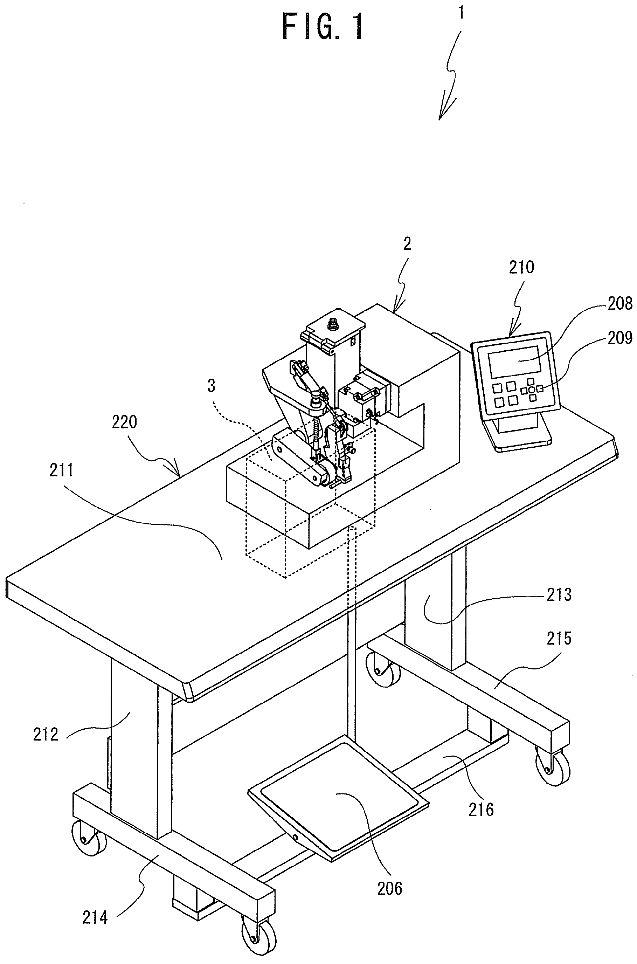

A configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes left and right support portions 214, 215, a foot holder 216, left and right leg portions 212, 213, and a top board 211. The left support portion 214 and the right support portion 215 each are substantially prismatic members with the back-and-forth direction as a longitudinal direction. The left support portion 214 and the right support portion 215 each include casters at the lower face of the front and back end portions. Thus, a worker can easily move the table 220. The foot holder 216 having an elongated plate shape connects the left support portion 214 and the right support portion 215 substantially at the centers thereof in the back-and-forth direction. A pedal 206 is provided substantially at the center of the foot holder 216 in the right-and-left direction. The worker may use the pedal 206 to adjust a feed speed of the cloths.

The left leg portion 212 having a plate shape extends vertically upwards from a slightly rear end side relative to the center of the left support portion 214 in the back-and-forth direction. Similarly, the right leg portion 213 having a plate shape extends vertically upward from a slightly rear end side relative to the center of the right support portion 215 in the back-and-forth direction. The top board 211 is connected to the upper ends of the left and right leg portions 212 and 213. The top board 211 has a rectangular plate shape in a plan view, with the right-and-left direction as its longitudinal direction. The left and right leg portions 212 and 213 support the top board 211 at a predetermined height from a mounting surface.

The bonding machine 2 is mounted on the upper face of the top board 211 substantially at the center thereof. The length of the top board 211 in the right-and-left direction is about triple the length of the bonding machine 2 in the right-and-left direction. The length of the top board 211 in the back-and-forth direction is about twice the length of the bonding machine 2 in the back-and-forth direction.

The top board 211 has an operation panel 210 on the right side of a position where the bonding machine 2 is fixed. The operation panel 210 includes a liquid crystal display (LCD) portion 208 and a plurality of keys 209. The LCD portion 208 displays various items of information thereon. The keys 209 are directed for inputting various items of setting information. A worker may set various operations of the cloth bonding apparatus 1 by operating the keys 209 while looking at the LCD portion 208.

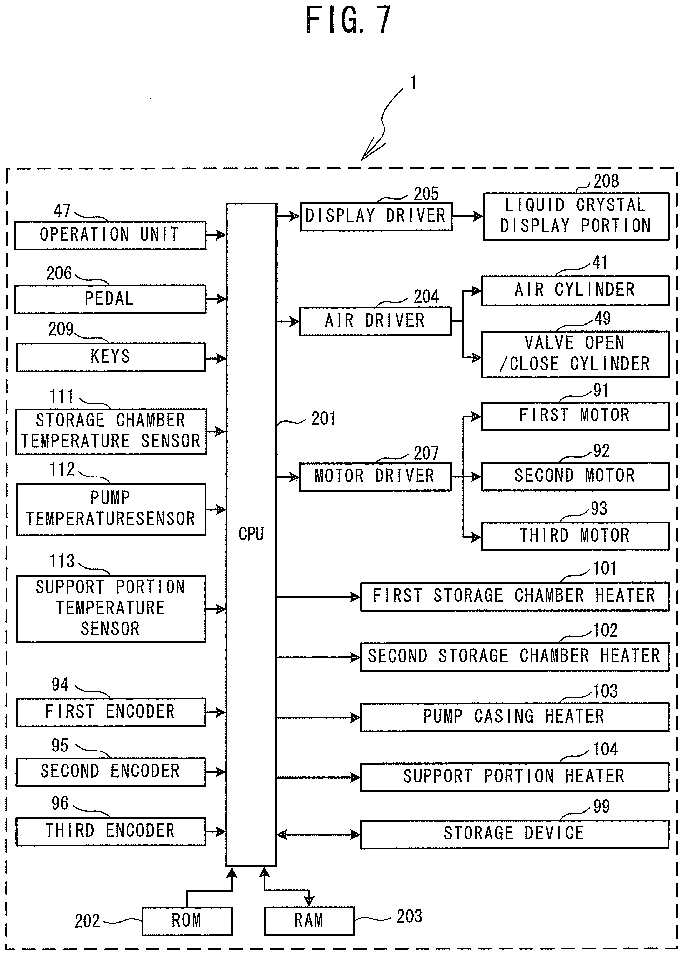

A control box 3 is fixed at the lower face of the top board 211. The control box 3 stores a control substrate having a CPU 201 (see Fig. 7) and the like mounted thereon. The control box 3 is electrically connected to the bonding machine 2, the operation panel 210 and the pedal 206.

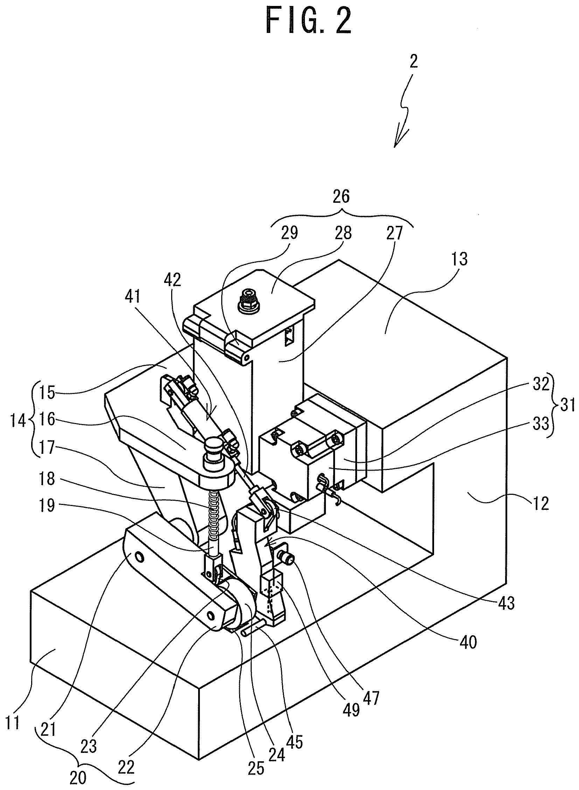

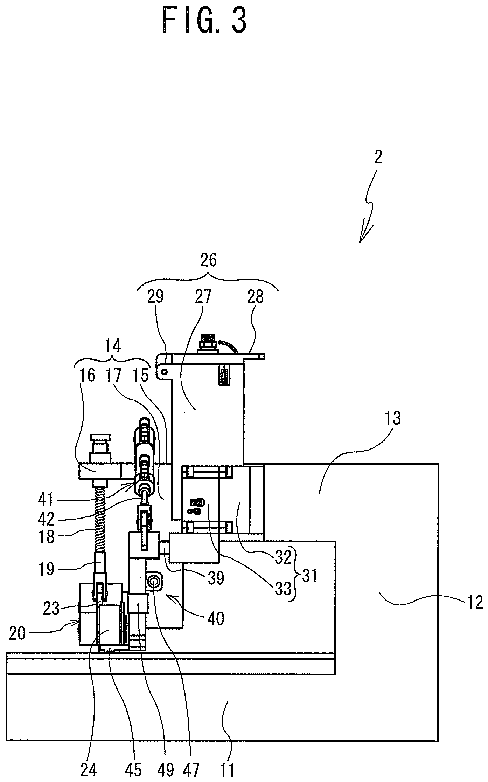

The configuration of the bonding machine 2 according to the first embodiment will be described with reference to Figs. 2 to 4. It is defined that the upper side and the lower side of Fig. 3 are the upper side and the lower side of the bonding machine 2, respectively. It is defined that the left side and the right side of Fig. 3 are the left side and the right side of the bonding machine 2, respectively. And it is defined that the front side and the back side of Fig.3 are the front side and the back side of the bonding machine 2, respectively.

As shown in Figs. 2 and 3, the bonding machine 2 includes a bed portion 11, a pillar portion 12 and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12.

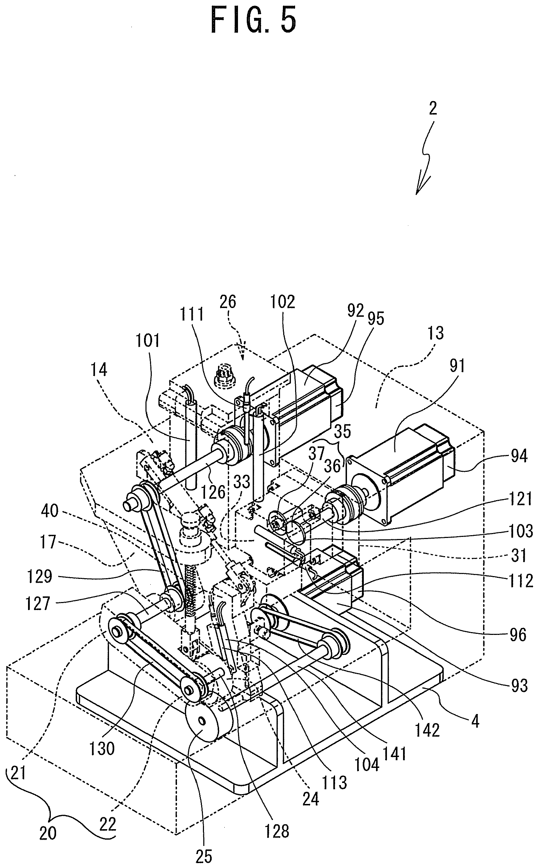

The bed portion 11 includes therein a lower feed roller 25 (see Fig. 5), a third motor 93 (see Fig. 5) and the like. The lower feed roller 25 presses and feeds cloths in conjunction with an upper feed roller 24, which will be described later. The third motor 93 drives the lower feed roller 25. The bed portion 11 functions as a base that supports the pillar portion 12. The pillar portion 12 supports the arm portion 13. As shown in Fig. 2, the left end of the arm portion 13 supports a beam portion 14, a storage chamber 26 and a pump casing 31 from behind in this order. The arm portion 13 includes therein a first motor 91 (see Fig. 5), a second motor 92 (see Fig. 5) and the like. The first motor 91 drives a gear pump 35 (see Fig. 5). The second motor 92 drives the upper feed roller 24.

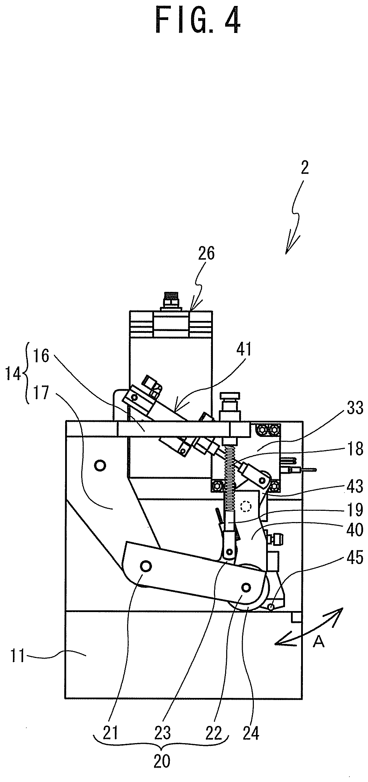

The beam portion 14, the storage chamber 26 and the pump casing 31 will be described below in order. The beam portion 14 and a roller holding portion 20 connected to the beam portion 14 will be described first. As shown in Fig. 2, the beam portion 14 includes a body portion 15, a spring support portion 16, and a column portion 17. The body portion 15 is a member extending horizontally leftward from the rear left end of the arm portion 13. The length of the body portion 15 in the right-and-left direction is about one third of the length of the bed portion 11 in the right-and-left direction. The spring support portion 16 has a plate shape and extends horizontally forward from the left end portion of the body portion 15. The length of the spring support portion 16 in the back-and-forth direction is about half the length of the bed portion 11 in the back-and-forth direction. As shown in Figs. 2 and 4, the column portion 17 extends obliquely downward from the body portion 15 at about 45 degrees relative to the horizontal plane. There is a gap between the lower end of the column portion 17 and the bed portion 11.

As shown in Fig. 2, the spring support portion 16 has a hole at the front end portion. The spring support portion 16 supports a shaft portion 19 in a vertically movable manner. The shaft portion 19 is inserted through the spring 18. The upper end part of the shaft portion 19 is inserted into the hole of the spring support portion 16. The column portion 17 has a shaft portion extending horizontally leftward from the lower end part thereof. The shaft portion supports a rear end portion 21 of the roller holding portion 20. The roller holding portion 20 may swing a front end portion 22 in the vertical direction with the shaft portion as the center of swing. The body portion 15 is provided with an air cylinder 41 at the right side of the spring support portion 16. The air cylinder 41 is directed for moving the position of a support portion 40, which will be described later.

The front end portion 22 of the roller holding portion 20 rotatably supports the upper feed roller 24. The upper feed roller 24 has a cylindrical shape. The upper feed roller 24 is positioned near the back of the nozzle 45. The nozzle 45 projects leftward from the support portion 40. The roller holding portion 20 has a shaft support portion 23 on the upper face slightly forward from the center. The shaft support portion 23 supports the lower end of the shaft portion 19 inserted through the spring 18. The spring 18 is interposed between the spring support portion 16 and the bottom portion of the shaft portion 19. The spring 18 urges the shaft portion 19 downward thereby urging the roller holding portion 20 connected to the shaft portion 19 downward.

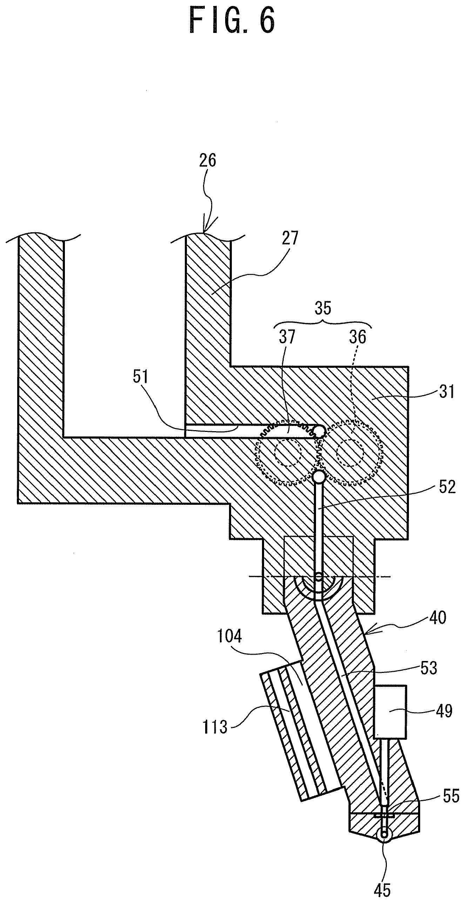

The storage chamber 26 will be described below. As shown in Figs. 2 and 3, the storage chamber 26 has a substantially rectangular parallelepiped shape with the vertical direction as the longitudinal direction. The storage chamber 26 extends upward from the left side of the arm portion 13 and from the back of the pump casing 31. The storage chamber 26 includes a body portion 27, a cover portion 28, and a cover shaft portion 29. The shape of the body portion 27 has a bottomed tube shape having an opening at the top. The cover portion 28 covers the opening at the top of the body portion 27. The body portion 27 has the cover shaft portion 29 at its upper end. The cover shaft portion 29 supports the cover portion 28 in an openable/closable manner. The storage chamber 26 stores an adhesive (not shown) inside the body portion 27. The stored adhesive may be supplied from the storage chamber 26 to the gear pump 35 (see Figs. 5 and 6) and to the nozzle 45 as needed.

The pump casing 31 and the support portion 40 connected to the pump casing 31 will be described below. As shown in Figs. 2 and 3, the pump casing 31 includes a first pump casing 32 and a second pump casing 33. The first pump casing 32 is a substantially cubic member. The first pump casing 32 is fixed on the left side face of the arm portion 13 with four screws. The first pump casing 32 has a concave portion at its left side. The first pump casing 32 includes the gear pump 35 (see Figs. 5 and 6) inside the concave portion. The gear pump 35 supplies an appropriate amount of the adhesive to the nozzle 45 with high accuracy. The second pump casing 33 is fixed to the left side face of the first pump casing 32 with four screws to cover the gear pump 35. The first pump casing 32 and the second pump casing 33 form a pump chamber. The pump chamber houses the gear pump 35. The gear pump 35 supplies the adhesive to the nozzle 45 in a pressurized manner.

As shown in Fig. 3, the second pump casing 33 includes a shaft portion 39 (see Fig. 3) at the left side of its bottom. The shaft portion 39 swingably supports the support portion 40. The vertical length of the first pump casing 32 is substantially the same as that of the arm portion 13. The position of the second pump casing 33 in the right-and-left direction is substantially the same as the center position of the bed portion 11 in the right-and-left direction. The pump casing 31 includes a first channel 51 (see Fig. 6) and a second channel 52 (see Fig. 6), which will be described later. The first channel 51 leads the adhesive from the storage chamber 26 to the gear pump 35. The second channel 52 leads the adhesive from the gear pump 35 to the support portion 40.

As shown in Figs. 2 and 3, the shape of the support portion 40 is substantially rectangular parallelepiped with the vertical direction as the longitudinal direction. A small gap is present between the lower end of the support portion 40 and the bed portion 11. The support portion 40 includes a drive transmitting portion 43 at its upper end. The drive transmitting portion 43 supports an end of a movable portion 42 of the air cylinder 41. The support portion 40 swings back and forth (in the direction of arrow A in Fig. 4) with the shaft portion 39 as the center axis when the movable portion 42 of the air cylinder 41 moves back and forth.

The nozzle 45 projects leftward from the lower end portion of the support portion 40. As shown in Fig. 2, the nozzle 45 is cylindrical. When the movable portion 42 of the air cylinder 41 moves back and forth, the nozzle 45 moves to a position where the cloth bonding work is performed (hereinafter referred to as a use position) and to a position where maintenance is performed (hereinafter referred to as a maintenance position). The nozzle 45 has a discharge port from which the adhesive is discharged. When the worker performs the cloth bonding work, the discharge port opposes the bed portion 11. When performing the bonding work, the worker inserts the nozzle 45 between two layers of oppositely arranged cloths. The gear pump 35 supplies the adhesive to the nozzle 45 through a third channel 53 (see Fig. 6) provided inside the support portion 40. The nozzle 45 discharges the adhesive from the discharge port onto the cloth. As a result, the adhesive may be applied on the surface of the lower cloth positioned below the nozzle 45.

An operation portion 47 and a valve open/close cylinder 49 will be described below. As shown in Figs. 2 and 3, the support portion 40 is provided with the operation portion 47 at its right side substantially at the center in the vertical direction. The operation portion 47 is a push button switch. The operation portion 47 is electrically connected with the control box 3. When the worker operates (presses) the operation portion 47, the CPU 201 of the control box 3 stops discharging the adhesive from the nozzle 45. The operation to stop discharging the adhesive will be described later in detail. The support portion 40 includes the valve open/close cylinder 49 at its front side. The valve open/close cylinder 49 operates a valve 55 (see Fig. 6) for blocking off the third channel 53 (see Fig. 6) of the adhesive. The valve 55 will be described later in detail.

The inner configuration of the bonding machine 2 according to the first embodiment will be described below with reference to Fig. 5. As shown in Fig. 5, the bonding machine 2 includes therein the first motor 91, the second motor 92, the third motor 93, and the like. The first motor 91 drives the gear pump 35. The second motor 92 drives the upper feed roller 24. The third motor 93 drives the lower feed roller 25.

The first motor 91 transmits a rotation drive force to the gear pump 35 via a rotary shaft 121 thereby driving the gear pump 35. The gear pump 35 includes a drive gear 36 and a driven gear (idler gear) 37. The drive gear 36 is fixed at the left end of the rotary shaft 121. Accordingly, the drive gear 36 rotates along with the rotary shaft 121. The driven gear 37 meshes with the drive gear 36. The first motor 91 is positioned inside the arm portion 13 and to the right side of the portion where the pump casing 31 is connected to the arm portion 13. The rotary shaft 121 extends inside the pump casing 31 leftward from the rotary shaft of the first motor 91. The drive gear 36 and the driven gear 37 supply an appropriate amount of the adhesive to the nozzle 45.

The second motor 92 transmits a rotation drive force to the upper feed roller 24 via the rotary shafts 126, 127, 128 and belts 129, 130 thereby driving the upper feed roller 24. The second motor 92 is positioned inside the arm portion 13 and to the right side of the portion where the beam portion 14 is connected with the arm portion 13. The rotary shaft 126 extends leftward from the rotary shaft of the second motor 92 and extends through the body portion 15. The left end of the rotary shaft 126 is positioned inside the column portion 17. The left end of the rotary shaft 126 supports a pulley. The right end of the rotary shaft 127 is positioned inside the lower end of the column portion 17 and the left end of the rotary shaft 127 is positioned inside the rear end portion 21 of the roller holding portion 20. The right end and left end of the rotary shaft 127 each support a pulley. The rotary shaft 128 is a rotary shaft of the upper feed roller 24. The left end of the rotary shaft 128 is positioned inside the front end portion 22 of the roller holding portion 20 and supports a pulley. The right end of the rotary shaft 128 projects from the front end portion 22 and supports the upper feed roller 24. The belt 129 is crossed between the pulley at the left end of the rotary shaft 126 and the pulley at the right end of the rotary shaft 127 inside the column portion 17. The belt 130 is crossed between the pulley at the left end of the rotary shaft 127 and the pulley at the left end of the rotary shaft 128 inside the roller holding portion 20. The upper feed roller 24 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 24 and inside the bed portion 11. The bed portion 11 has a support portion 4 therein. The support portion 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93. The upper feed roller 24 and the lower feed roller 25 rotate to press cloths sandwiched therebetween and to feed the cloths in the feeding direction from front to back.

A first encoder 94 is connected to the right end of the first motor 91. The first encoder 94 detects a rotation amount of the first motor 91. A second encoder 95 is connected to the right end of the second motor 92. The second encoder 95 detects a rotation amount of the second motor 92. A third encoder 96 is connected to the right end of the third motor 93. The third encoder 96 detects a rotation amount of the third motor 93.

As shown in Fig. 5, the body portion 27 (see Fig. 2) of the storage chamber 26 includes a first storage chamber heater 101, a second storage chamber heater 102, and a storage chamber temperature sensor 111 in its peripheral wall. The first storage chamber heater 101 and the second storage chamber heater 102 heat the body portion 27 to heat the adhesive stored in the body portion 27. The storage chamber temperature sensor 111 detects a temperature of the body portion 27 to measure a temperature of the adhesive stored in the body portion 27. The bonding machine 2 uses the first storage chamber heater 101, the second storage chamber heater 102, and the storage chamber temperature sensor 111 to heat a hot-melt adhesive to a predetermined temperature in the storage chamber 26 and to liquefy the adhesive.

The second pump casing 33 of the pump casing 31 has a pump casing heater 103 and a pump temperature sensor 112 therein. The pump casing heater 103 heats the second pump casing 33 to heat the adhesive flowing in from the gear pump 35. The pump temperature sensor 112 measures a temperature of the second pump casing 33.

The support portion 40 has a support portion heater 104 and a support portion temperature sensor 113 therein. The support portion heater 104 heats the support portion 40 to heat the adhesive flowing from the second pump casing 33 into the nozzle 45. The support portion temperature sensor 113 measures a temperature of the support portion 40.

The channels of the adhesive in the bonding machine 2 and the valve 55 for blocking off the channel will be described with reference to Fig. 6. As shown in Fig. 6, the body portion 27 of the storage chamber 26 has the peripheral wall and a bottom wall. The body portion 27 stores the adhesive within a space enclosed by the peripheral wall and the bottom wall. The first channel 51 is a through hole extending toward the pump casing 31 at the lower end of the peripheral wall at the pump casing 31 side. The first channel 51 is a channel for leading the adhesive stored in the body portion 27 to the gear pump 35.

The first channel 51 extends from the storage chamber 26 to the center in the second pump casing 33 (see Figs. 2 and 3) of the pump casing 31. The first channel 51 bends rightward (toward the back side of Fig. 6) at the center of the second pump casing 33 and reaches a position above where the drive gear 36 and the driven gear 37 intermesh with each other. The rotations of the drive gear 36 and the driven gear 37 apply pressure to the adhesive that has flowed in through the first channel 51 and supply the adhesive into the second channel 52 that extends from a position below where the drive gear 36 and the driven gear 37 intermesh with each other.

The second channel 52 extends leftward (toward the front side of Fig. 6) inside the second pump casing 33 from below the gear pump 35. The second channel 52 extending leftward bends downward inside the second pump casing 33, then bends leftward at the lower end portion of the second pump casing 33, and reaches the inside of the upper end portion of the support portion 40. The second channel 52 is connected to the third channel 53 inside the upper end portion of the support portion 40.

The third channel 53 extends from the upper end portion to the lower end portion inside the support portion 40 and is connected to the nozzle 45. The valve 55 is provided at the lower end portion of the third channel 53. The valve 55 operates to block off the third channel 53. As stated above, the valve open/close cylinder 49 opens or closes the valve 55 to open or block off the third channel 53. The CPU 201 (see Fig. 7) in the control box 3 controls the operation of the valve open/close cylinder 49.

An electrical configuration of the cloth bonding apparatus 1 will be described with reference to Fig. 7. As shown in Fig. 7, the cloth bonding apparatus 1 includes the CPU 201, a ROM 202, a RAM 203, and a storage device 99. The CPU 201 receives input information and detection information to execute a control processing and the like. The input information is information inputted via the input device, such as the operation portion 47 or the keys 209. The detection information is information detected by various sensors and the like. The control processing is directed for controlling various motors, heaters, actuators and the like. The ROM 202 stores programs to be executed by the CPU 201, various initial setting parameters and the like. The RAM 203 temporarily stores a timer, a counter, a flag, and the like. The storage device 99 stores various items of setting information inputted by the worker. The CPU 201 is electrically connected with the ROM 202, the RAM 203 and the storage device 99, respectively. The CPU 201 can access storage areas of the ROM 202, the RAM 203 and the storage device 99, respectively.

The operation portion 47 is electrically connected with the CPU 201. The worker may press the operation portion 47 if the worker desires to stop discharging of the adhesive from the nozzle 45. The CPU 201 recognizes a signal from the operation portion 47 indicating whether or not to discharge the adhesive. The CPU 201 controls whether or not to supply the adhesive to the nozzle 45 on the basis of the recognized signal.

The pedal 206 is electrically connected with the CPU 201. The worker may use the pedal 206 to adjust the cloth feed speed. The CPU 201 recognizes an amount by which the pedal 206 is pressed down by the foot of the worker. The CPU 201 determines rotation speeds of the upper feed roller 24 and the lower feed roller 25 on the basis of the recognized pressed amount of the pedal 206.

The keys 209 are electrically connected with the CPU 201. The worker may use the keys 209 to enter various operation settings. The CPU 201 recognizes the press state of the keys 209 operated by the worker. The CPU 201 stores the information on various operation settings in the storage device 99 on the basis of the recognized press state of the keys 209.

The temperature sensors 111 to 113 each are electrically connected with the CPU 201. The CPU 201 recognizes the information on the temperatures detected by the temperature sensors 111 to 113. The CPU 201 recognizes the temperature of the adhesive flowing inside the storage chamber 26, the pump casing 31, and the support portion 40 on the basis of the information on the temperatures respectively detected by the temperature sensors 111 to 113.

The encoders 94 to 96 each are electrically connected with the CPU 201. The CPU 201 recognizes the information on the rotation amounts respectively detected by the encoders 94 to 96. The CPU 201 recognizes actual rotation speeds of the motors 91 to 93 on the basis of the information on the rotation amounts detected by the encoders 94 to 96, respectively.

A display driver 205 is electrically connected with the CPU 201. The LCD portion 208 is electrically connected with the display driver 205. The CPU 201 displays desired information on the LCD portion 208 via the display driver 205.

An air driver 204 is electrically connected with the CPU 201. The air cylinder 41 and the valve open/close cylinder 49 each are electrically connected with the air driver 204. The CPU 201 controls a pressure of the air to be fed into the air cylinder 41 and the valve open/close cylinder 49 via the air driver 204. The support portion 40 moves to the use position or to the maintenance position on the basis of the operation of the air cylinder 41. The valve 55 opens or blocks off the third channel 53 on the basis of the operation of the valve open/close cylinder 49.

A motor driver 207 is electrically connected with the CPU 201. The motors 91 to 93 each are electrically connected with the motor driver 207. The CPU 201 controls the motors 91 to 93 via the motor driver 207. Heaters 101 to 104 each are electrically connected to the CPU 201. The CPU 201 controls ON/OFF of the respective heaters 101 to 104.

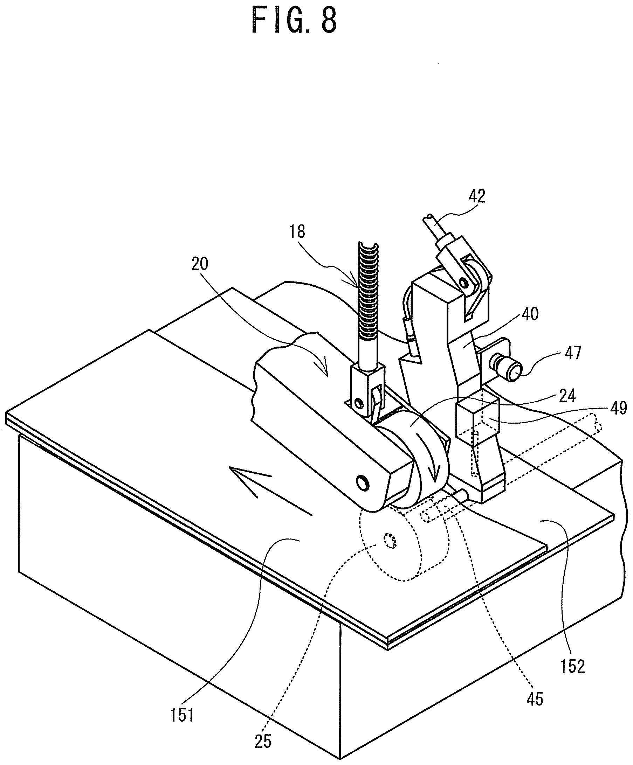

The operation of the bonding machine 2 at the time of the bonding work will be described below with reference to Fig. 8, using an example where an upper cloth 151 and a lower cloth 152 are bonded with each other.

As shown in Fig. 8, when performing the bonding work, the worker moves the movable portion 42 of the air cylinder 41 (see Figs. 2 to 4) forward and arranges the support portion 40 at the use position. The worker then arranges the upper cloth 151 and the lower cloth 152 in a stacked manner and sandwiches the nozzle 45 at a position where the cloths are bonded. The worker vertically sandwiches the upper cloth 151 and the lower cloth 152 with the upper feed roller 24 and the lower feed roller 25 behind the nozzle 45.

When the worker steps on and presses down the pedal 206 in the aforementioned state, the gear pump 35 (see Figs. 5 and 6) rotates. As a result, the adhesive is supplied through the channels 51 to 53, discharged downward from the discharge port of the nozzle 45, and adheres to the lower cloth 152. At the same time, the upper feed roller 24 and the lower feed roller 25 rotate in the direction in which the upper cloth 151 and the lower cloth 152 are fed from front to back. The spring 18 urges the upper feed roller 24 downward. Thus, the upper feed roller 24 and the lower feed roller 25 press the upper cloth 151 and the lower cloth 152 each other to be bonded together.

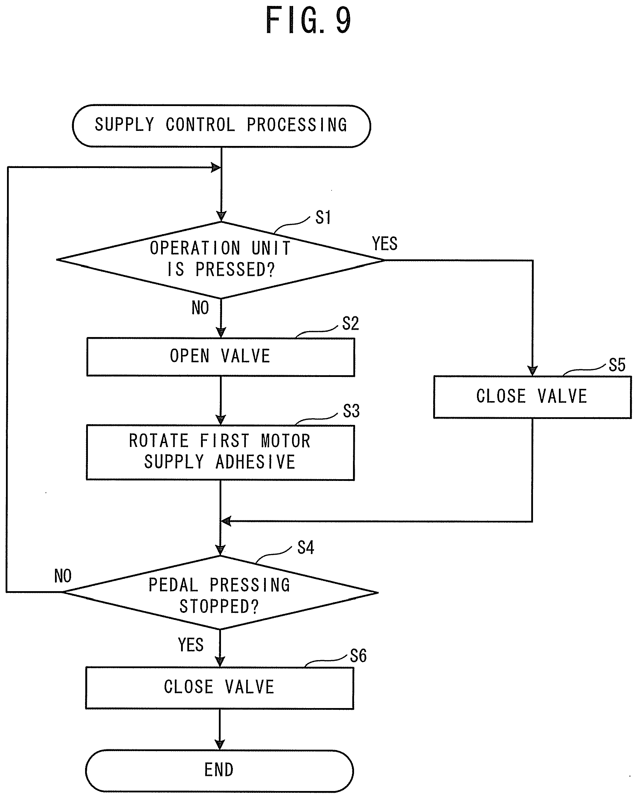

A supply control processing of the cloth bonding apparatus 1 according to the first embodiment will be described with reference to Fig. 9. When the worker steps on and presses down the pedal 206 in a state where the cloth bonding work may be performed, the CPU 201 performs the supply control processing shown in Fig. 9. When the worker presses down the pedal 206, the CPU 201 rotates the second motor 92 and the third motor 93 at a speed proportional to the amount by which the pedal 206 is pressed down, thereby feeding the cloths with the upper feed roller 24 and the lower feed roller 25.

As shown in Fig. 9, the CPU 201 determines whether the worker is pressing the operation portion 47, which is a push button switch (S1). When the worker is not pressing the operation portion 47 (S1: NO), the CPU 201 controls the valve open/close cylinder 49 to open the valve 55 (S2). The CPU 201 rotates the first motor 91 according to the cloth feed speed, that is, the amount by which the pedal 206 has been pressed down. The first motor 91 rotates to rotate the gear pump 35. The gear pump 35 rotates to supply the adhesive to reach the nozzle 45 (S3). The CPU 201 determines whether the worker has stopped pressing the pedal 206 (S4). When the worker has not stopped pressing the pedal 206 (S4: NO), the CPU 201 returns to the determination processing in step S1.

When it is determined that the worker is pressing the operation portion 47 (S1: YES), the CPU 201 controls the valve open/close cylinder 49 to close the valve 55. Consequently, the valve 55 blocks off the third channel 53 (S5). At the same time, the CPU 201 stops the first motor 91. Thus, the gear pump 35 does not supply the adhesive to the nozzle 45. The CPU 201 determines whether the worker has stopped pressing the pedal 206 (S4). When the worker has not stopped pressing the pedal 206 (S4: NO), the CPU 201 returns to the determination processing in step S1. When the worker has stopped pressing the pedal 206 (S4: YES), the CPU 201 controls the valve open/close cylinder 49 to close the valve 55 (S6), and then terminates the processing.

As described above, in accordance with the cloth bonding apparatus 1 of the first embodiment, the worker may control discharging of the adhesive from the nozzle 45 onto the lower cloth by operating the operation portion 47. The operation portion 47 is positioned near the nozzle 45, the upper feed roller 24 and the lower feed roller 25. Thus, the worker may easily control discharging of the adhesive without looking away from the cloths and the nozzle 45. More specifically, the support portion 40 supporting the nozzle 45 includes the operation portion 47. Thus, the worker may control discharging of the adhesive while easily confirming whether the adhesive is being applied between the cloths.

When the worker presses the operation portion 47, the cloth bonding apparatus 1 stops the operation of the gear pump 35 that pressurizes and supplies the adhesive to the nozzle 45, so that discharging of the adhesive from the nozzle 45 stops. Thus, the cloth bonding apparatus 1 may directly and easily stop discharging of the adhesive from the nozzle 45 without excess power consumption. When the worker presses the operation portion 47, the cloth bonding apparatus 1 blocks off the third channel 53 that leads the adhesive to the nozzle 45. Thus, the cloth bonding apparatus 1 may reliably stop discharging of the adhesive without dropping the adhesive from the nozzle 45.

The adhesive discharged from the nozzle 45 may turn from liquid into solid along with a decrease in its temperature. Thus, the cloth bonding apparatus 1 may strongly bond the cloths with each other. The cloth bonding apparatus 1 may remarkably easily perform the bonding work of two layers of cloths without making unevenness on the cloth surfaces, unlike stitching with a needle and a thread or ultrasonic welding. Since the worker may not need to look away from the vicinity of the nozzle 45 when operating the operation portion 47, the cloth bonding apparatus 1 may be superior in workability.

The gear pump 35 and the first motor 91 according to the above embodiment correspond to the "supplying portion" of the present invention. The CPU 201 that controls the supply of the adhesive from the gear pump 35 to the nozzle 45 functions as the "supply controlling portion". The valve 55, the valve open/close cylinder 49, and the CPU 201 that controls the operation of the valve 55 correspond to the "blocking-off portion". The upper feed roller 24 and the lower feed roller 25 correspond to the "feeding portion". The roller holding portion 20 corresponds to the "holding portion" of the present invention.

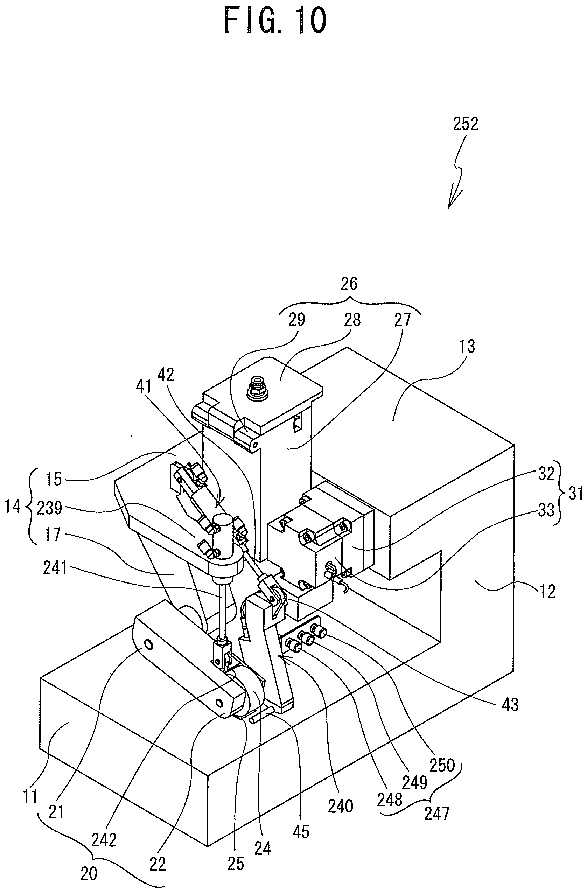

A cloth bonding apparatus according to a second embodiment of the present invention will be described with reference to Figs. 10 to 15. The configuration of the cloth bonding apparatus according to the second embodiment is different from the configuration of the cloth bonding apparatus 1 according to the first embodiment in that an operation portion 247 is provided with a plurality of switches (operation members) 248 to 250. In the description of the second embodiment, same reference numerals are denoted to the same structures as those of the first embodiment and the description thereof will be omitted or simplified.

A configuration of a bonding machine 252 of the cloth bonding apparatus according to the second embodiment will be described below with reference to Fig. 10. As shown in Fig. 10, the beam portion 14 of the bonding machine 252 includes a cylinder support portion 239, in place of the spring support portion 16 according to the first embodiment. The cylinder support portion 239 horizontally extends forward from the left end portion of the body portion 15. The cylinder support portion 239 has an air cylinder 241 at its end. An output shaft of the air cylinder 241 is connected to a support portion 242 of the roller holding portion 20. As the output shaft of the air cylinder 241 moves vertically, the front end portion 22 of the roller holding portion 20 moves vertically. The air driver 204 (see Fig. 7) controls the pressure of the air to be fed into the air cylinder 241.

The second pump casing 33 of the bonding machine 252 swingably supports the support portion 240. The support portion 240 has a substantially rectangular parallelepiped shape with the vertical direction as the longitudinal direction. A slight gap is present between the lower end of the support portion 240 and the bed portion 11. The nozzle 45 projects leftward from the lower end portion of the support portion 240.

The support portion 240 has the operation portion 247 on its right side at the substantial center of the vertical direction. The operation portion 247 is different from the operation portion 47 (see Fig. 2) according to the first embodiment. The operation portion 247 includes three push button switches. These switches are operation members that may be operated by the worker. Specifically, the operation portion 247 includes a first switch 248, a second switch 249, and a third switch 250 aligned side by side from the left. The switches 248 to 250 are positioned in the vicinity of the nozzle 45. Thus, the worker may operate the switches 248 to 250 while confirming whether or not the bonding step is appropriately proceeding.

The cloth bonding apparatus according to the second embodiment may assign any of multiple functions to the respective switches 248 to 250. The multiple functions may be various functions for giving an instruction of controlling the operation of the cloth bonding apparatus. The worker may easily perform the bonding work by assigning desired functions to the switches 248 to 250, respectively. As described later, by changing the functions to be assigned to the switches 248 to 250 depending on the bonding process, the worker may input an instruction to control the operation in a way suitable for the bonding process.

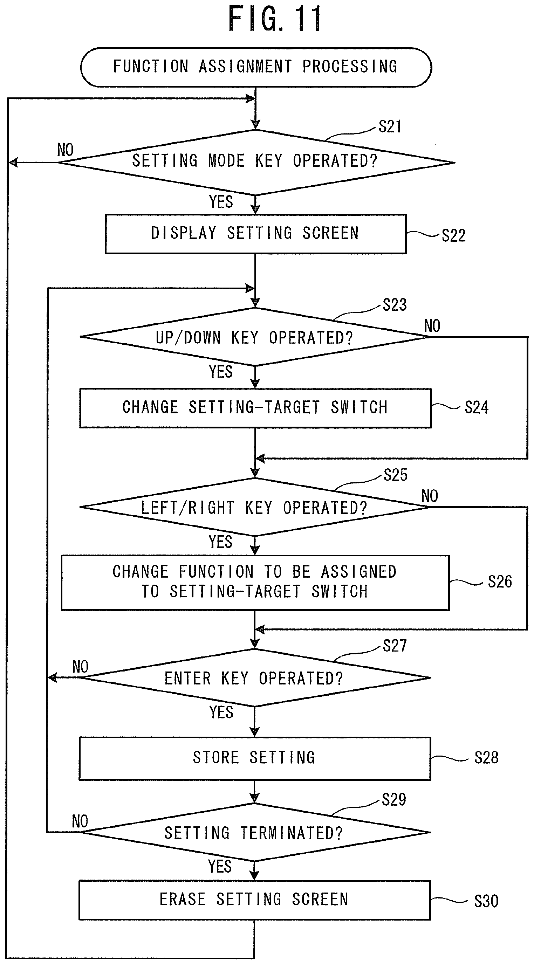

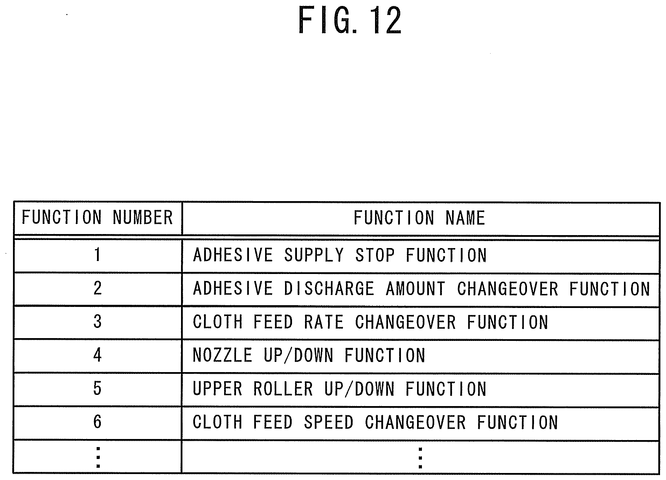

The function assignment processing of the cloth bonding apparatus according to the second embodiment will be described below with reference to Figs. 11 and 12. The CPU 201 executes the function assignment processing. In the function assignment processing, the CPU 201 assigns the functions to the switches 248 to 250, respectively, based on the operation of the keys 209 (see Fig. 1) of the operation panel 210. The CPU 201 performs the function assignment processing when the power supply of the cloth bonding apparatus is turned ON.

As shown in Fig. 11, the CPU 201 determines whether the setting mode key has been operated among the keys 209 (S21). While the setting mode key has not been operated (S21: NO), the CPU 201 repeatedly determines whether the setting mode key has been operated (S21). If the setting mode key has been operated (S21: YES), the CPU 201 controls the display driver 205 to display a setting screen on the LCD portion 208 (see Fig. 1) (S22). The operation mode of the cloth bonding apparatus enters the setting mode when the setting screen is displayed. The setting mode is directed for assigning the functions to the switches 248 to 250. The setting screen displays thereon the three switches 248 to 250 and the function numbers of the functions that have been assigned to each switch. As shown in Fig. 12, the cloth bonding apparatus stores function numbers and function names associated with each other in the ROM 202. The setting screen displays the switches 248 to 250, one of which is enclosed with a thick frame as a setting-target switch for which a function is to be set.

The CPU 201 determines whether the up key or the down key has been operated among the keys 209 (S23). If the up key or the down key has been operated (S23: YES), the CPU 201 changes the one of the three switches 248 to 250 enclosed with the thick frame to another of the switches 248 to 250. For example, if the switch 249 has been enclosed with the thick frame and then the up key is pressed, the CPU 201 displays the switch 248 as enclosed in the thick frame. The CPU 201 changes the setting-target switch depending on a type of the operated key (either the up key or the down key) (S24). While the up key or the down key has not been operated (S23: NO), the CPU 201 proceeds to a determination processing in step S25.

The CPU 201 determines whether the left key or the right key has been operated among the keys 209 (S25). If the left key or the right key has been operated (S25: YES), the CPU 201 changes the function assigned to the setting-target switch to another function, depending on a type of the operated key (either the left key or the right key) (S26). If the left key or the right key has not been operated (S25: NO), the CPU 201 proceeds to a determination processing in step S27.

Examples of the functions assignable to the switches 248 to 250 will be described with reference to Fig. 12. An "adhesive supply stop function" denoted as function number 1 is directed for inputting an instruction of controlling and stopping the discharge of the adhesive from the nozzle 45. An "adhesive discharge amount changeover function" denoted as function number 2 is directed for inputting an instruction of changing an amount of the adhesive to be discharged. The amount of the adhesive to be discharged from the nozzle 45 changes each time the worker operates the switch to which the adhesive discharge amount changeover function is assigned. The cloth bonding apparatus stores preset discharge amounts of multiple kinds. Each time the worker operates the switch to which the adhesive discharge amount changeover function is assigned, the discharge amount sequentially changes. The adhesive discharge amount changeover function may be convenient for the worker who desires to adjust the discharge amount of the adhesive frequently. A "cloth feed rate changeover function" denoted as function number 3 is directed for inputting an instruction of changing a rotation rate of the upper feed roller 24 and the lower feed roller 25 (see Fig. 10).

A "nozzle up/down function" denoted as function number 4 is directed for inputting an instruction of swinging the support portion 240 to move the position of the nozzle 45 in the vertical direction. Each time the worker operates the switch to which the nozzle up/down function is assigned, the movable portion 42 of the air cylinder 41 (see Fig. 10) moves back and forth. Consequently, the support portion 240 swings upward or downward. An "upper roller up/down function" denoted as function number 5 is directed for inputting an instruction of moving the position of the upper feed roller 24 in the vertical direction. Each time the worker operates the switch to which the upper roller up/down function is assigned, the output shaft of the air cylinder 241 (see Fig. 10) moves vertically. Consequently, the front end portion 22 of the roller holding portion 20 moves upward or downward. Since the front end portion 22 rotatably supports the upper feed roller 24, the upper feed roller 24 also moves upward or downward. A "cloth feed speed changeover function" denoted as function number 6 is directed for inputting an instruction of changing the setting of the cloth feed speed. Each time the worker operates the switch to which the cloth feed speed changeover function is assigned, the cloth feed speed changes. Some of the aforementioned functions will be described later by way of examples of the specific usage.

In the processing in step S26 shown in Fig. 11, the CPU 201 may also assign the same function to two or three switches according to the operation of the keys 209 by the worker. For example, the worker may frequently use only the "adhesive supply stop function" in the bonding process. The worker may cause the CPU 201 to assign the "adhesive supply stop function" denoted as function number 1 to all of the first switch 248, the second switch 249, and the third switch 250 by operating the keys 209. In the processing in step S26, each time the right key is operated, the CPU 201 changes the function assigned to the setting-target switch to another function whose function number is larger by 1. Each time the left key is operated, the CPU 201 changes the function assigned to the setting-target switch to the function whose function number is smaller by 1.

After the processing on the left key or the right key is completed (S25: NO, or S25: YES, S26), the CPU 201 determines whether the enter key has been operated among the keys 209 (S27). If the enter key has not been operated (S27: NO), the CPU 201 returns to the determination processing in step S23. If the enter key has been operated (S27: YES), the CPU 201 stores the setting of the function assignment at a current time in the storage device 99 (see Fig. 7) (S28), and determines whether to terminate the setting operation (S29). If the return key has been operated among the keys 209, the CPU 201 determines not to terminate the setting operation (S29: NO). If the setting is not terminated, the CPU 201 returns to the determination processing in step S23. If the normal mode key has been operated among the keys 209, the CPU 201 determines to terminate the setting operation (S29: YES). If the setting operation is terminated, the CPU 201 erases the setting screen to return its operation mode to the normal mode (S30). The CPU 201 then returns to the determination processing in step S21.

The CPU 201 assigns any of the multiple functions to the three switches 248 to 250, respectively, in the function assignment processing described above. When the worker operates any of the three switches 248 to 250, the cloth bonding apparatus operates depending on the function assigned to the switch operated by the user.

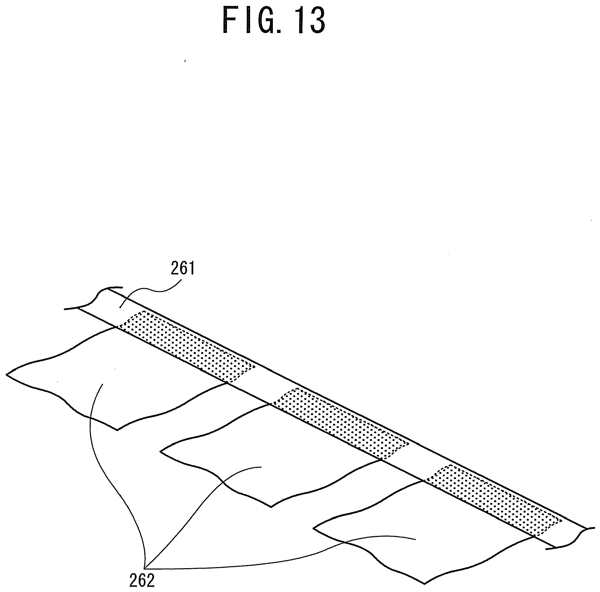

A specific example of using the switches 248 to 250 will be described with reference to Figs. 13 to 15.

Fig. 13 shows an example in which the cloth bonding apparatus bonds a several pieces of cloths 262 onto one elongated tape 261. The pieces of cloths 262 are disposed with predetermined intervals therebetween. In a process of bonding the tape 261 and the pieces of cloths 262 shown in the example of Fig. 13, there may be a step of stopping the discharge of the adhesive between the respective bonding steps of the pieces of cloths 262. Thus, the worker may need to frequently change the operations of the cloth bonding apparatus (discharging and stopping of the adhesive). In such a case, the worker may assign the "adhesive supply stop function" denoted as function number 1 to at least one of the three switches 248 to 250 by operating the keys 209. The worker may easily change the operations of discharging and stopping the adhesive, while confirming whether the bonding process is appropriately proceeding.

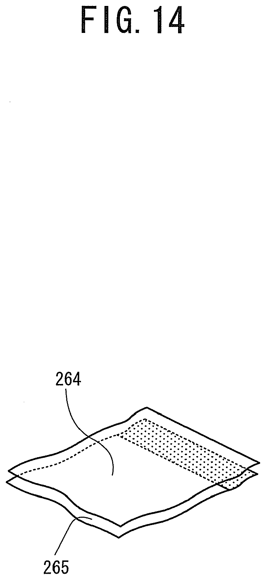

Fig. 14 shows an example in which the cloth bonding apparatus accurately bonds the two cloths 264, 265 along a hem without making a non-bonded part. Unless the cloth bonding apparatus uniformly applies the adhesive along the hem from the front end (upper corner portion in the figure) to the rear end (right corner portion in the figure) of the lower cloth 265, the two cloths 264, 265 may not be bonded along the hem without a non-bonded part. Moreover, unless the worker accurately aligns the front ends of the two cloths 264, 265, the cloth bonding apparatus may not accurately bond the cloths 264, 265 together. In such a case, the desirable steps may go as follows. In the first step, the cloth bonding apparatus applies the adhesive to the front end of the lower cloth 265. In the second step, the worker puts the upper cloth 264 over the lower cloth 265, while aligning the positions of the front ends thereof. In the third step, the cloth bonding apparatus presses and feeds the cloths 264 and 265 with the upper feed roller 24 and the lower feed roller 25 (see Fig. 10). While the upper cloth 264 is not laid over the lower cloth 265, the upper feed roller 24 may be contaminated with the adhesive. Therefore, the worker may need to raise the upper feed roller 24 in order to prevent the contamination of the upper feed roller 24. In such a case, the worker may assign the "upper roller up/down function" denoted as function number 5 to at least one of the three switches 248 to 250 by operating the keys 209. The worker may easily make the upper roller up/down movement control instruction, which may be inputted frequently, at an appropriate time.

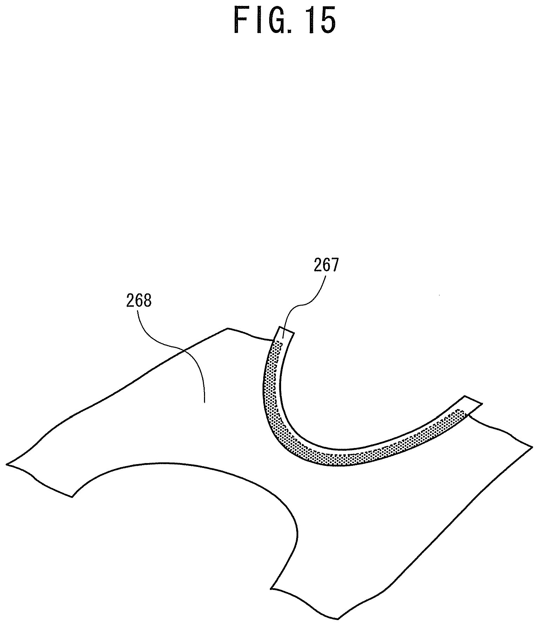

Fig. 15 shows an example in which the cloth bonding apparatus bonds a curved elongated cloth 267 onto a curved hem of a cloth 268. Generally, a cloth has directional stretch properties. Specifically, when the cloth is a woven fabric made of a combination of warps and wefts, the cloth more easily stretches in the bias direction than in a warp direction or in a weft direction. The warp direction is parallel to a direction in which the warps stretch. The weft direction is parallel to a direction in which the wefts stretch. The bias direction is oblique relative to the warp direction or the weft direction. When the cloth is a knitted fabric, the cloth more easily stretches in the horizontal direction than in the longitudinal direction. The longitudinal direction is a direction in which the mesh loops are arranged in the longitudinal direction. The horizontal direction is a direction in which the mesh loops are arranged in the horizontal direction.

When the cloth bonding apparatus bonds the cloth 267 and the cloth 268 having a curved shape as shown in Fig. 15, the warp direction, the weft direction or the mesh direction of the cloths relative to the cloth feed direction changes along with the movement of the cloths. Thus, the cloths may non-uniformly stretch. Consequently, the bonded cloths are likely to have a wavy surface, which may be undesirable. Therefore, in order to prevent the undesirable result, the worker may need to appropriately change the rotation rate (cloth feed rate) of the upper feed roller 24 and the lower feed roller 25 depending on the bonding position along with the stretching of the cloths. In the example, the worker may assign the "cloth feed rate changeover function" denoted as function number 3 to at least one of the three switches 248 to 250. The worker may easily change the cloth feeding rate depending on the bonding position.

As described above, in accordance with the cloth bonding apparatus according to the second embodiment, the worker may assign desired functions to the switches 248 to 250, respectively, considering the frequency in use, the usability and the like of the functions in each step. Thus, the worker may perform the cloth bonding work more easily by operating the cloth bonding apparatus. If the number of functions frequently used by the worker is smaller than the number of switches 248 to 250, the worker may cause the CPU 201 to assign the same function to two or more switches by operating the keys 209. Thus, the worker may be less likely to erroneously input an unintended control instruction. The keys 209 function as a "designation receiving portion" of the present invention. The CPU 201 that performs the function assignment processing in response to the operation of the keys 209 functions as the "assigning portion" of the present invention.

The configurations or processing in the above-described embodiments are exemplary and, of course, various modifications may be made thereto within the scope of the claims. The modified embodiments of the above embodiments will be described below. In the following modified embodiments, identical numbers are denoted to the identical structures to those in the above embodiments and the description thereof will be omitted or simplified.

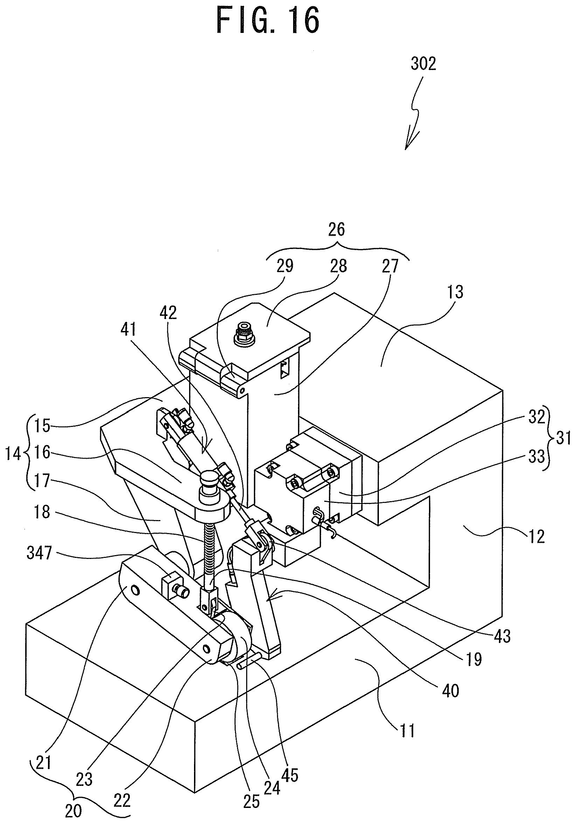

A modified embodiment 1 of the aforementioned exemplary embodiments will be described with reference to Fig. 16. As shown in Fig. 16, the roller holding portion 20 may have an operation portion 347. The roller holding portion 20 holds the upper feed roller 24. The worker may operate the operation portion 347 when inputting an operation control instruction. The worker may confirm whether the upper feed roller 24 is appropriately feeding the cloths while pressing and bonding the cloths. The worker may easily input the control instruction while confirming the operation of the upper feed roller 24.

As in the first embodiment and the modified embodiment 1, it may be desirable that the support portion 40 or the roller holding portion 20 includes the operation portion 47 or 347. This is because the support portion 40 is a member which supports the nozzle 45 and the roller holding portion 20 is a member which holds the upper feed roller 24. Nevertheless, the operation portion 47 or 347 may be installed at any other position as long as the operation portion 47 or 347 is in the vicinity the nozzle 45 or the upper feed roller 24. For example, the spring support portion 16 of the beam portion 14 may hold the operation portion 47 or 347 in a suspended manner. Also in the example, the worker may control the discharge of the adhesive while confirming whether the work is appropriately proceeding. The roller holding portion 20 may include the operation portion 247 (multiple switches 248 to 250) according to the second embodiment. The operation portion 247 may be installed at any other position as long as the operation portion 247 is in the vicinity of the nozzle 45 or the upper feed roller 24.

A bonding machine 302 according to the modified embodiment 1 does not include the valve 55 and the valve open/close cylinder 49 (see Fig. 6). When stopping discharging the adhesive, it may be desirable for the bonding machine to stop the operation of the gear pump 35 and blocks off the third channel 53, as in the above embodiments. Nevertheless, the bonding machine 302 may stop discharging the adhesive by any one of the methods of stopping the operation of the gear pump 35 and of blocking off the third channel 53. For example, the bonding machine 302 according to the modified embodiment 1 may stop discharging the adhesive only by stopping the gear pump 35. The bonding machine may stop discharging the adhesive only by blocking off the channel of the adhesive. The bonding machine may stop feeding the adhesive by other methods.

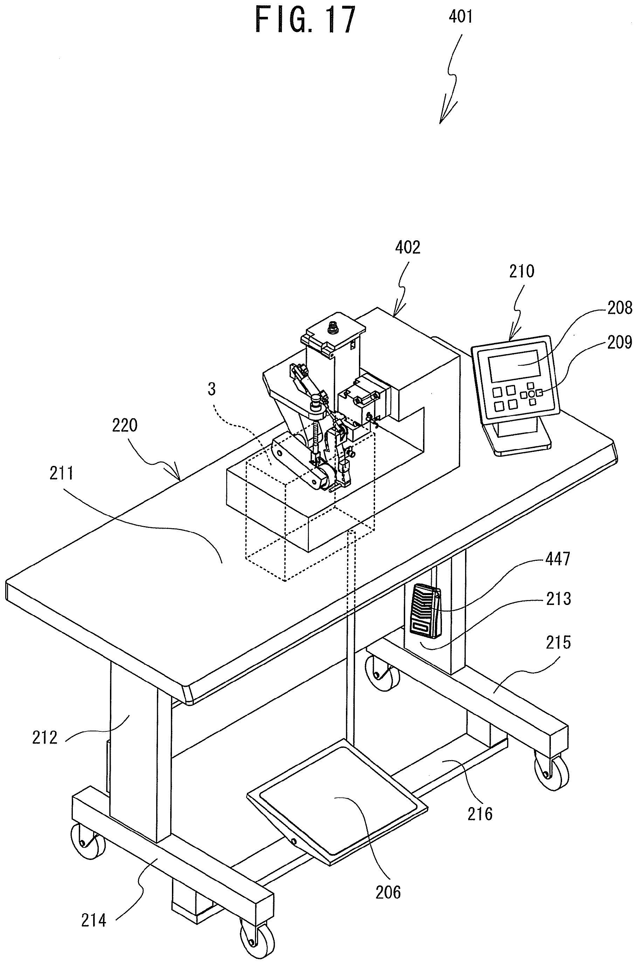

A modified embodiment 2 of the aforementioned embodiments will be described with reference to Fig. 17. As shown in Fig. 17, a cloth bonding apparatus 401 according to the modified embodiment 2 includes an operation portion 447 on the left face of the right leg portion 213. A knee of the worker may be placed near the left face of the right leg portion 213. When controlling the discharge of the adhesive from the nozzle 45 of the bonding machine 402, the worker may operate the operation portion 447 with the knee. The worker may easily control the discharge of the adhesive with the knee while confirming whether the work is appropriately proceeding.

The above embodiments may be modified in other ways. For example, in the above embodiments, the CPU 201 controls the valve open/close cylinder 49 to operate the valve 55. The structure of the valve 55 may be appropriately changed. For example, the valve 55 may be configured to directly operate in response to the worker's pressing of the operation portion 47 to block off the third channel 53. The valve 55 may be operated not by the air-actuated valve open/close cylinder 49 but by a solenoid or the like. The installation position of the valve 55 is not limited to the lower end of the third channel 53. The structure to feed the cloths may be appropriately modified. For example, a belt may be employed as the structure to feed the cloths, in place of the lower feed roller 25, or the lower feed roller 25may be omitted.

The push button of the operation portion 47 according to the above first embodiment automatically returns to the non-operation position due to a spring force when the worker puts the hand away from the operation portion 47. In such a case, the worker may press the operation portion 47 only when the worker desires to stop discharging the adhesive, thereby easily controlling the discharging of the adhesive. The operation portion 47 may be a changeover operation portion that maintains the state even after the worker puts the hand away. In such a case, the worker may stop discharging the adhesive without continuing to operate the operation portion 47 if the discharging of the adhesive is desired to be stopped for a long time.

In the second embodiment described above, six functions are exemplified as the functions assignable to the switches 248 to 250 (see Fig. 12). The functions assignable to the switches 248 to 250 are not limited to the examples. The method for assigning the functions is not limited to the above embodiments and may be appropriately changed.

Examples in which the cloth bonding apparatus bonds separate pieces of cloths together are given in the above embodiments and the modified embodiments. However, the cloth bonding apparatus may bond the folded portions of one folded cloth. In other words, the cloth bonding apparatus may bond two layers of cloth(s).

## Claims

1. A cloth bonding apparatus (1) comprising:
a nozzle (45) through which an adhesive is dischargeable onto a first layer of cloth;
a discharging portion (35, 91, 201) adapted to discharge the adhesive through the nozzle (45) and including a supplying portion (35, 91) adapted to pressurize and supply the adhesive to the nozzle (45), and a supply controlling portion (201) that controls a supply of the adhesive to the nozzle (45) by the supplying portion (35, 91);
a feeding portion (24, 25) adapted to press and feed the first layer of cloth with a second layer of cloth;
a pedal (206) adapted to adjust a speed of feeding the first layer of cloth and the second layer of cloth; and an operation portion (47, 247, 347) adapted to be operated by an operator for giving an instruction of controlling an operation of the cloth bonding apparatus (1), and adapted to output, to the supply controlling portion (201), a signal indicating whether or not to cause the supplying portion (35, 91) to supply the adhesive,
wherein the discharging portion includes a blocking-off portion (55, 49, 201) that, in a state in which the pedal is pressed by the operator, operates in response to an operation of the operation portion (47, 247, 347) and blocks off a channel (53) adapted to lead the adhesive to the nozzle (45), and
wherein the operation portion is positioned in the vicinity of the nozzle (45) or the feeding portion (24, 25).

2. The cloth bonding apparatus (1) according to claim 1,
further comprising a supporting portion (40, 240) that supports the nozzle (45),
wherein the operation portion (47, 247) is provided at the supporting portion (40, 240).

3. The cloth bonding apparatus (1) according to claim 1,
further comprising a holding portion (20) that holds the feeding portion (24),
wherein the operation portion (347) is provided at the holding portion (20).

4. The cloth bonding apparatus (1) according to anyone of claims 1 to 3, wherein
the operation portion (247) includes a plurality of operation members (248, 249, 250) adopted to be operated by the operator, and
the cloth bonding apparatus (1) further comprises an assigning portion (201) that assigns any of a plurality of functions for giving the instruction of controlling the operation of the cloth bonding apparatus (1) to the respective plurality of operation members (248, 249, 250).

5. The cloth bonding apparatus (1) according to claim 4, wherein
the assigning portion (201) is capable of assigning the same function to two or more of the operation members (248, 249, 250).

6. The cloth bonding apparatus (1) according to anyone of claims 4 or 5,
further comprising a designation receiving portion (209) that receives information for designating which of the plurality of functions to be assigned to any one of the plurality of operation members (248, 249, 250),
wherein the assigning portion (201) assigns any of the plurality of functions to any of the plurality of operation members (248, 249, 250), according to the information received by the designation receiving portion (209).

7. The cloth bonding apparatus (1) according to anyone of claims 1 through 6, wherein:
the operator is able to operate the operation portion without largely moving the hand while adjusting feeding of the first and second layers of cloth with the hand.

## Patentansprüche

1. Vorrichtung zum Verbinden von Stoff (1), umfassend:
eine Düse (45), durch welche ein Klebstoff auf eine erste Lage von Stoff ausgelassen werden kann;
einen Auslassabschnitt (35, 91, 201), welcher dazu angepasst ist, den Klebstoff durch die Düse (45) auszulassen und einen Lieferabschnitt (35, 91) enthält, welcher dazu angepasst ist, den Klebstoff unter Druck zu setzen und an die Düse (45) zu liefern, und einen Liefersteuerabschnitt (201), welcher eine Belieferung des Klebstoffs zur Düse (45) durch den Auslassabschnitt (35, 91) steuert;
einen Förderabschnitt (24, 25), welcher dazu angepasst ist, die erste Lage von Stoff auf eine zweiten Lage von Stoff zu drücken und zu damit zu fördern;
ein Pedal (206), welches dazu angepasst ist, eine Geschwindigkeit des Förderns der ersten Lage von Stoff und der zweiten Lage von Stoff anzupassen; und
einen Betriebsabschnitt (47, 247, 347), welcher dazu angepasst ist, durch einen Bediener bedient zu werden, um eine Anweisung zur Steuerung eines Betriebs einer Vorrichtung zum Verbinden von Stoff (1) zu geben, und dazu angepasst ist, an den Liefersteuerabschnitt (201) ein Signal auszugeben, welches anzeigt, ob es den Lieferabschnitt (35, 91) anweisen soll, den Klebstoff zu liefern oder nicht,
wobei der Auslassabschnitt einen Blockierabschnitt (55, 49, 201) aufweist, welcher, in einem Zustand, in welchem das Pedal durch den Bediener betätigt ist, auf einen Betrieb des Betriebsabschnitts (47, 247, 347) antwortet und einen Kanal (53) blockiert, welcher dazu angepasst ist, den Klebstoff zu der Düse (45) zu leiten, und
wobei der Betriebsabschnitt in der Nähe der Düse (45) des Förderabschnitts (24, 25) positioniert ist.

2. Vorrichtung zum Verbinden von Stoff (1) gemäß Anspruch 1, weiterhin umfassend einen Lagerabschnitt (40, 240), welcher die Düse (45) lagert,
wobei der Betriebsabschnitt (47, 247) auf dem Lagerabschnitt (40, 240) bereitgestellt ist.

3. Vorrichtung zum Verbinden von Stoff (1) gemäß Anspruch 1,
weiterhin umfassend einen Halteabschnitt (20), welcher den Förderabschnitt (24) hält,
wobei der Betriebsabschnitt (347) auf dem Halteabschnitt (20) bereitgestellt ist.

4. Vorrichtung zum Verbinden von Stoff (1) gemäß einem der Ansprüche 1 bis 3, wobei
der Betriebsabschnitt (247) eine Vielzahl von Betriebsteilen (248, 249, 250) beinhaltet, welche dazu angepasst sind, durch den Bediener bedient zu werden, und
die Vorrichtung zum Verbinden von Stoff (1) weiterhin einen Zuweisabschnitt (201) umfasst, welcher jegliche der Vielzahl von Funktionen zum Geben der Anweisungen zum Steuern des Betriebs der Vorrichtung zum Verbinden von Stoffs (1) der entsprechenden Vielzahl von Betriebsteilen (248, 249, 250) zuweist.

5. Vorrichtung zum Verbinden von Stoff (1) gemäß Anspruch 4,
wobei
der Zuweisabschnitt (201) dazu in der Lage ist, die gleiche Funktion zwei oder mehreren der Betriebsteile (248, 249, 250) zuzuweisen.

6. Vorrichtung zum Verbinden von Stoff (1) gemäß einem der Ansprüche 4 oder 5,
weiterhin umfassend einen Bestimmungsempfangsabschnitt (209), welcher Informationen zum Bestimmen empfängt, welche der Vielzahl von Funktionen eines der Vielzahl der Betriebsteile (248, 249, 250) zugewiesen werden soll,
wobei der Zuweisabschnitt (201) eine der Vielzahl von Funktionen einem der Vielzahl von Betriebsteilen (248, 249, 250) zuweist, gemäß der Information, welche durch den Bestimmungsempfangsabschnitt (209) erhalten wurde.

7. Vorrichtung zum Verbinden von Stoff (1) gemäß einem der Ansprüche 1 bis 6, wobei:
der Bediener dazu in der Lage ist, den Betriebsabschnitt zu bedienen, ohne die Hand weit zu bewegen, während er das Fördern der ersten und zweiten Lage von Stoff mit der Hand einstellt.

## Revendications

1. Appareil de liage d'étoffe (1) comprenant :
une buse (45) à travers laquelle un adhésif peut être déversé sur une première couche d'étoffe ;
une portion de déversement (35, 91, 201) adaptée pour déverser l'adhésif à travers la buse (45) et comportant une portion de fourniture (35, 91) adaptée pour mettre sous pression et fournir l'adhésif à la buse (45), et une portion de commande de fourniture (201) qui commande une fourniture de l'adhésif à la buse (45) par la portion de fourniture (35, 91) ;
une portion de fourniture (24, 25) adaptée pour presser et fournir la première couche d'étoffe avec une seconde couche d'étoffe ;
une pédale (206) adaptée pour régler une vitesse de fourniture de la première couche d'étoffe et de la seconde couche d'étoffe ; et
une portion d'actionnement (47, 247, 347) adaptée pour être actionnée par un actionneur pour donner une instruction de commande d'un actionnement de l'appareil de liage d'étoffe (1), et adaptée pour délivrer en sortie, à la portion de commande de fourniture (201), un signal indiquant s'il faut amener ou non la portion de fourniture (35, 91) à fournir l'adhésif,
dans lequel la portion de déversement comporte une portion de blocage (55, 49, 201) qui, dans un état où la pédale est enfoncée par l'actionneur, actionne en réponse à un actionnement de la portion d'actionnement (47, 247, 347) et bloque un canal (53) adapté pour mener l'adhésif vers la buse (45), et
dans lequel la portion d'actionnement est positionnée à proximité de la buse (45) ou de la portion de fourniture (24, 25).

2. Appareil de liage d'étoffe (1) selon la revendication 1,
comprenant en outre une portion de support (40, 240) qui supporte la buse (45),
dans lequel la portion d'actionnement (47, 247) est prévue au niveau de la portion de support (40, 240).

3. Appareil de liage d'étoffe (1) selon la revendication 1,
comprenant en outre une portion de maintien (20) qui maintient la portion de fourniture (24),
dans lequel la portion d'actionnement (347) est prévue au niveau de la portion de maintien (20).

4. Appareil de liage d'étoffe (1) selon l'une quelconque des revendications 1 à 3, dans lequel
la portion d'actionnement (247) comporte une pluralité d'organes d'actionnement (248, 249, 250) adaptés pour être actionnés par l'actionneur, et
l'appareil de liage d'étoffe (1) comprend en outre une portion d'attribution (201) qui attribue l'une quelconque d'une pluralité de fonctions pour donner l'instruction de commande de l'actionnement de l'appareil de liage d'étoffe (1) à la pluralité respective d'organes d'actionnement (248, 249, 250).

5. Appareil de liage d'étoffe (1) selon la revendication 4, dans lequel
la portion d'attribution (201) est capable d'attribuer la même fonction à deux ou plus des organes d'actionnement (248, 249, 250).

6. Appareil de liage d'étoffe (1) selon l'une quelconque des revendications 4 ou 5,
comprenant en outre une portion de réception de désignation (209) qui reçoit des informations pour désigner lesquelles de la pluralité de fonctions doivent être attribuées à l'un quelconque de la pluralité d'organes d'actionnement (248, 249, 250),
dans lequel la portion d'attribution (201) attribue l'une quelconque de la pluralité de fonctions à l'un quelconque de la pluralité d'organes d'actionnement (248, 249, 250), selon les informations reçues par la portion de réception de désignation (209).

7. Appareil de liage d'étoffe (1) selon l'une quelconque des revendications 1 à 6, dans lequel :
l'actionneur est capable d'actionneur la portion d'actionnement sans beaucoup bouger la main tout en réglant la fourniture des première et seconde couches d'étoffe à la main.
